# EUROPEAN PATENT SPECIFICATION

(11) **EP 1 372 405 B1**
(45) Date of publication and mention of the grant of the patent: **23.05.2007**
(21) Application number: 02724138.9
(22) Date of filing: 27.03.2002
(51) Int. Cl.: A23G 9/04, A23G 9/22, A23G 9/26

(54) **METHOD OF MAKING FROZEN PRODUCTS WITH A CHARACTERISTIC FORM FROM AT LEAST ONE FLOWABLE TYPE OF MATERIAL, APPARATUS AND USE HEREOF**
VERFAHREN ZUR HERSTELLUNG GEFRORENER PRODUKTE MIT EINER CHARAKTERISTISCHEN FORM AUS MINDESTENS EINEM FLIESSFÄHIGEN MATERIAL, VORRICHTUNG UND VERFAHREN DAFÜR
PROCEDE DE FABRICATION DE PRODUITS CONGELES PRESENTANT UNE FORME CARACTERISTIQUE A PARTIR D'AU MOINS UNE SUBSTANCE DE TYPE FLUIDE, APPAREIL ET UTILISATION ASSOCIES

(30) Priority: 28.03.2001 DK 200100518
(43) Date of publication of application: 02.01.2004
(73) Proprietor: Tetra Laval Holding & Finance S.A., 1009 Pully (CH)
(72) Inventor: LARSEN, Peter, H., DK-8270 Hojbjerg (DK)
(74) Representative: Olesen, Kaj
(86) International application number: PCT/DK2002/000218
(87) International publication number: WO 2002/078460

(56) References cited:
- EP-A2- 0 040 989
- US-A- 2 048 364
- US-A- 4 413 461

## Description

### Background of the invention

The present invention relates to a method of making frozen products with a characteristic form from at least one flowable type of material, an apparatus and use hereof.

In the area of creating frozen products, such as ice cream sticks or ice lollipops, it desirable to make frozen products with a characteristic form.

So far, the characteristic form has been achieved by using a freezing mould with the desired characteristics. However, this method has the disadvantage of making frozen products with a somewhat blurred form.

Further, the method does not allow quality surfaces with details to be made, as the method is too crude. With the method, it is also very difficult to mass fabricate the frozen products with a high degree of uniformity.

If the frozen product is applied with a surface of another material, such as chocolate, it is especially difficult to achieve uniform and detailed products with the known method. The material will usually hide or smooth out any details under the surface.

The object of the invention is to create a method and apparatus for making frozen products with a characteristic form from at least one flowable type of material without the above-mentioned disadvantages.

Especially, it is an object of the invention to create a method and apparatus for making frozen products with a characteristic form in which high-quality characteristics and details are produced, e.g. well-defined and distinct, regardless of whether they are simple or complicated in shape and have surfaces of another material.

### The invention

In accordance with the invention, claim 1 states a method of making frozen products with a characteristic form from at least one flowable type of material, said frozen products comprising edible ice products such as ice cream sticks, ice lollipops, ice dessert or the like, said method including the following steps: placing a first quantity of said flowable type of material in a first mould or moulding part in order to create a basic frozen form of an ice product, adding a surface coating to said basic frozen form, and forming said frozen form of the product into a characteristic form, said forming including modification of the product in a second mould or moulding part, said second mould or moulding part basically comprising the contours of said characteristic form.

Hereby, it is possible to create a frozen product with a surface coating and a characteristic form, such as a 3D figure, that is well-defined and distinct in its details.

The phrase "flowable type of material" may be understood as any type of edible fluid such as ice cream mix, fruit juice, lemonade or soft drink that may be frozen.

The term "modification" is to be understood as a change of the basic form of the product, said basic form already comprising a form close to the finalized product.

The modification may provide a more accurate defining or shaping of already existing details which have bee blurred by e.g. a surface coating.

The phrase "mould or moulding part" is to be understood to include more than one moulding apparatus, each dedicated to a step in the production process or to include one moulding apparatus performing one or more formings of a frozen product during the production process.

Further, the term "mould" is to be understood as any kind of process for creating a product in a form or forming part. The form may be a standard mould with one or more sections defining an interior chamber to be filled with the flowable product. In a more viscous version, the flowable product may be extruded before imposing an open mould on the product. Other possible types of forming methods and moulds are known by the skilled person.

Further examples of ice products may be ice bars, slices, logs, cakes, tubs or the like.

In an aspect of the invention, said basic frozen form partly or substantially comprises the characteristics of the frozen product after modification.

In another aspect of the invention, a surface of a liquid type of material is added to said basic frozen form of the product and solidified prior to modification. With a solidified surface, it is possible to obtain a surface with the desired characteristics regardless of the liquid type of material used. Especially, embossing details into the surface may restore details in the basic form which would usually be hidden by thicker liquid types.

In a further aspect of the invention, said modification includes cooling of the ice product in said first and/or second mould or moulding part(s), preferably by cooling the surface of said first and/or second mould or moulding part(s).

In an even further aspect of the invention, cooling is generated by means of a cryogenic material such as liquid nitrogen or dry ice. By using a cryogenic fluid, it is possible to obtain the low temperatures necessary or at least to make it easy to remove an ice product from a mould.

In another aspect of the invention, the temperature of said cooling is lower than minus 65 degrees Celsius, such as between minus 75 and 179 degrees Celsius, and preferably between minus 75 and 80 degrees Celsius. Hereby, a preferred relation between temperatures, cooling means, such as means based on a cryogenic fluid, and the ice products has been obtained. At the above-mentioned temperature intervals, it is especially easy to remove an ice product from a mould, as the surface gains an anti-stick-like characteristic in relation to the ice product

During production, the ice product itself usually has a temperature of minus 5 to minus 20 degrees Celsius. As it contains a lot of air and water, the ice product is frozen but still of a rather soft nature which allows it to be processed e.g. embossed or stamped.

In a further aspect of the invention, the temperature of said cooling is controllable. Hereby, it is possible to create the optimal conditions during production for different types of ice products and surfaces as well as different types of modification. In particular, the temperature may be controlled just before or during modification when the surface of the ice product is chanced with the moulds.

In an even further aspect of the invention, the first mould or moulding part is also used as the second mould or moulding part.

Hereby, it is possible to create a compact and efficient system producing ice products with a surface coating comprising well-defined details.

Claim 9 states an apparatus for making frozen products with a characteristic form from at least one flowable type of material, said frozen products comprising edible ice products such as ice cream sticks, ice lollipops, ice dessert or the like, said apparatus comprising at least one first mould or moulding part adapted for a first quantity of a flowable type of material, cooling means for cooling the material of said at least one first mould or moulding part in order to create a basic frozen form of the product, and forming means to form said basic frozen form of the product into a characteristic form, said forming means including a second mould or moulding part which substantially comprises the contours of said characteristic form.

Hereby, it is possible to create a frozen product, such as a 3D figure, with a characteristic form which is well-defined and distinct in its details.

### Figures

The invention will be described in the following with reference to the figures, in which
- fig. 1: shows a preferred embodiment according to the invention schematically,
- figs. 2a to 2f: show the method steps of a preferred embodiment according to the invention,
- figs. 3a & 3b: show a first and second mould sections according to the invention, and
- figs. 4a & 4b: show an example of the basic form and finalized frozen product of the invention in perspective.

### Detailed description

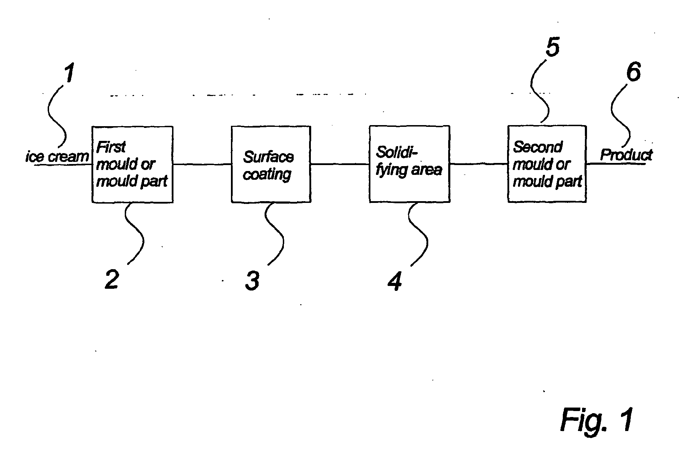

Fig. 1 shows a preferred embodiment of the invention schematically.

The embodiment comprises a method of making frozen ice products 6 with a characteristic form from an ice cream mix 1.

The first step of the method involves placing a first quantity of ice cream mix in a first mould 2. In the mould, the ice cream product obtains its basic form.

The second step involves adding of a surface to the basic frozen form of the ice product 3 after the first mould.

In the next step, the surface is solidified 4 by moving the ice product through a cooling area.

And in the last step, the basic frozen form is modified in a second mould which basically comprises the contours of the characteristic form 5.

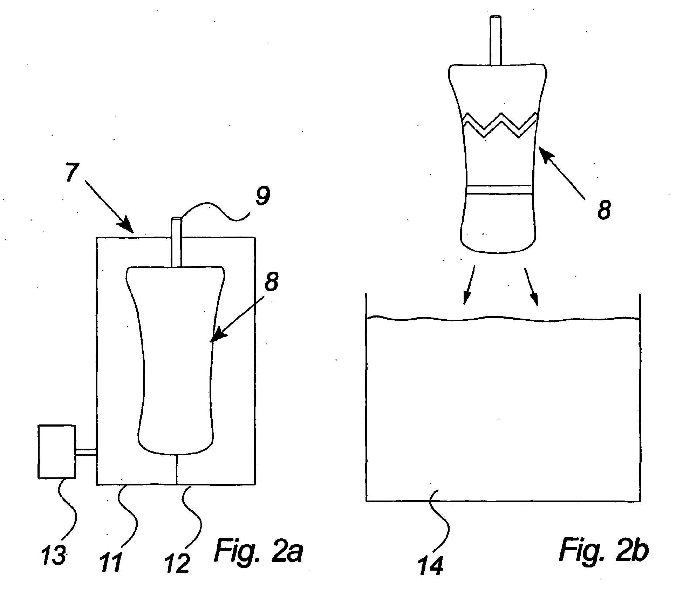

Figs. 2a to 2f show in detail a preferred method of creation of a frozen ice product with a characteristic form. The ice product created by the method is illustrated with ice cream or lollipop sticks and may be part of a standard ice production system in which the ice cream or lollipop sticks are conveyed in well-known product lines to the moulds etc. and subsequently packed in the necessary packaging by well-known packaging machines.

Fig. 2a shows the first mould 7 which comprises two mould sections 11, 12 defining an inner volume corresponding to the basic form 8 of the ice product. The ice product is illustrated by a holding stick 9 placed in the mould and the ice cream.

The mould is connected with cooling means 13 which supplies cooling in order to freeze the ice product. The cooling may be in the form of a cryogenic fluid, such as liquid nitrogen or dry ice, flowing in close proximity to the inner surfaces of the mould sections.

After the freezing, the mould sections may be separated and the frozen basic form 8 of the ice product be conveyed to the next phase of the production.

Fig. 2b shows the basic frozen form 8 of the ice product with a well-defined surface pattern 10. The ice product is conveyed to a container 14 containing a liquid such as chocolate or fruit juice. As indicated on the figure, the ice product is immersed in the liquid and thus provided with a surface layer of the liquid.

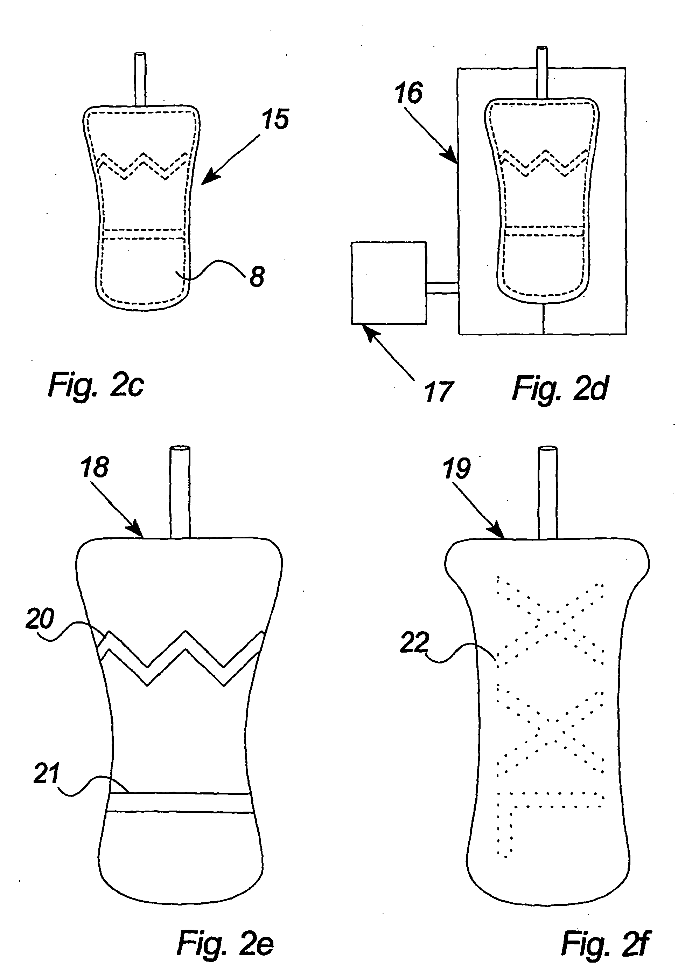

Fig. 2c shows the basic form of the ice product 8 with a solidified surface of the liquid 15. In order to solidify the layer quickly, the ice product is cooled down to a low temperature, e.g. by using a hardening tunnel for hardening of the ice cream and chocolate or fruit juice.

The pattern 10 of the basic frozen form 8 is indicated in the figure by dotted lines in order to illustrate the fact that the surface coating 15 covers and to some extent hides or blurs the pattern.

Fig. 2d shows the basic form of the ice product 8 with a solidified surface of the liquid 15 positioned in a second mould 16. The second mould defines an inner volume which substantially corresponds in size to that of the basic form of the ice product 8 with a solidified surface of the liquid. The inner surface of the second mould may comprise any kind of relief or contour to modify the surface in order to create a frozen product with a characteristic three-dimensional form or figure. The relief or contour may take on different shapes, marks, stamps, patterns, projections etc.

The second mould is connected to cooling means 17 in order to keep the ice product frozen during modification and to ensure that the ice product may be removed from the mould without sticking to the surface.

Figs. 2e and 2f show different finalized ice products 18, 19 with characteristic forms such as 3D figures. The products may include different shapes, patterns 20, 21 or commercial messages 22 such as brands, logos, trademarks etc. formed or embossed in the surface of the ice products.

In connection with figs. 2a to 2d, especially fig. 2e illustrates a preferred embodiment of the invention in which a basic frozen product comprises a 3D figure shape. The 3D figure shape is to some extent hidden or blurred by a surface coating and in order to redefine the 3D figure shape of the product, is positioned in a second mould. The second mould comprises the 3D figure shape including the extra surface thickness, and the result or finalized ice product of fig. 2e (and fig. 2f) will appear with a surface having well-defined details such as patterns 20 to 22.

To maintain a smooth and even surface coating, the difference in size between the first and second mould is usually quite small e.g. a few millimetres or less.

In a special embodiment of the invention, the first and second moulds are one and the same mould performing both process steps when creating an ice product with a well-defined surface.

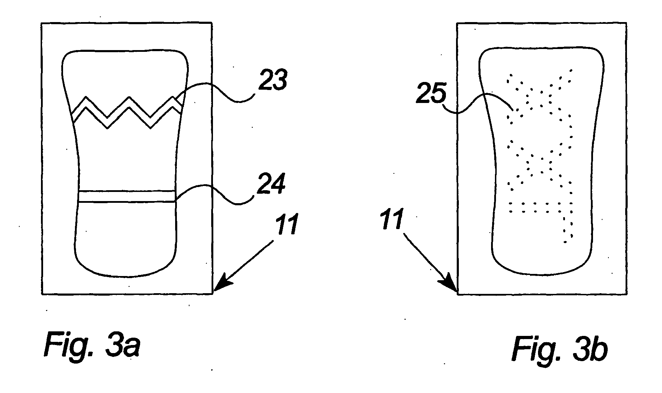

Figs. 3a and 3b show two second mould sections 11 with inner surfaces having different patterns 23 to 25. The patterns are embossed into the frozen product positioned in the mould.

The inner surface of the mould may be coated with a Teflon® or a similar anti-stick surface.

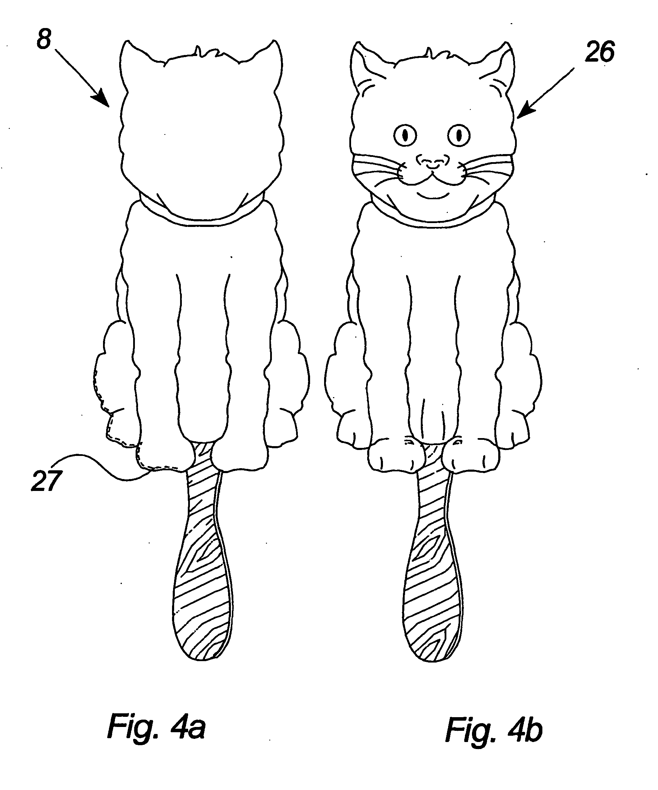

Figs. 4a and 4b show an example of the basic frozen ice product 8 as a three-dimensional figure under the surface layer (in which a section of the basic frozen ice product is illustrated by a dotted line 27) and a corresponding finalized ice product 26.

The finalized product 26 comprises a number of details which are added to the basic frozen ice product in a second mould.

However, as indicated in the figs. 2e-f, 3a-3b, 4a and 4b, the basic frozen ice product 8 includes most of the features of the finalized ice product.

It should be emphasized that the above-mentioned embodiment may be subject to several variations within the scope of the invention.

The second mould may comprise more than one moulding part in which the different moulds modify different parts of the product.

Further, the first and second moulds may be integrated in one machine in order to minimize the necessary space occupied. Generally, it should be emphasized that the physical distance between the different moulds should be kept small. By keeping a small distance, the need for cooling is minimized and the product is kept frozen at all times during production.

In a variation, different types of large quantities of ice cream may replace the ice cream or lollipop sticks, such as ice desserts and ice cream tubs, and receive embossing or the like to the surface. Stamps or impresses may be pressed against only a part of the surface of the ice product instead of using a mould to create the characteristic form.

Further, a rolling stamp may generally be used to decorate ice products by rolling it over part of the surface of the products.

### List

- 1.: Ice cream
- 2.: First mould or moulding part
- 3.: Surface coating
- 4.: Solidifying area such as a hardening tunnel
- 5.: Second mould or moulding part
- 6.: Finalized ice product
- 7.: Ice cream freezing mould
- 8.: Basic frozen form of an ice product
- 9.: Holding stick
- 10.: Solidification
- 11.: First mould section
- 12.: Second mould section
- 13.: Cooling means such as cryogenic liquid freezing means
- 14.: Surface coating area such as a chocolate or fruit juice dipping tank
- 15.: Surface coating
- 16.: Second mould or moulding part for surface decorating
- 17.: Cooling means
- 18.: First decorated ice product
- 19.: Second decorated ice product
- 20.: First surface decoration
- 21.: Second surface decoration
- 22.: Third surface decoration
- 23.: Moulding section with first stamping/marking means
- 24.: Moulding section with second stamping/marking means
- 25.: Moulding section with third stamping/marking means
- 26.: Finalized ice product
- 27.: Dotted line illustrating the underlying basic frozen form

## Claims

1. Method of making frozen products with a characteristic form from at least one flowable type of material, said frozen products comprising edible ice products such as ice cream sticks, ice lollipops, ice dessert or the like, said method including the following steps:
• placing a first quantity of said flowable type of material in a first mould or moulding part in order to create a basic frozen form of an ice product,
• adding a surface coating to said basic frozen form, and
• forming said frozen form of the product into a characteristic form,
said forming including modification of the product in a second mould or moulding part, said second mould or moulding part basically comprising the contours of said characteristic form.

2. Method according to claim 1, whereby said basic frozen form partly or substantially comprises the characteristics of the frozen product after modification.

3. Method according to claim 1 or 2, whereby said surface coating is a liquid type of material added to said basic frozen form of the product and solidified before modification.

4. Method according to any of the claims 1 to 3, whereby said modification includes cooling of the ice product in said first and/or second mould or moulding part(s), preferably by cooling the surface of said first and/or second mould or moulding part(s).

5. Method according to any of the claims 1 to 4, whereby cooling is generated by means of a cryogenic fluid such as liquid nitrogen or dry ice.

6. Method according to any of the claims 1 to 5, whereby the temperature of said cooling is lower than minus 65 degrees Celsius, such as between minus 75 and 179 degrees Celsius, and preferably between minus 75 and 80 degrees Celsius.

7. Method according to any of the claims 1 to 6, whereby the temperature of said cooling is controllable.

8. Method according to any of the claims 1 to 7, whereby the first mould or moulding part is also used as the second mould or moulding part.

9. Apparatus for making frozen products with a characteristic form (18, 19, 26) from at least one flowable type of material, said frozen products comprising edible ice products such as ice cream sticks, ice lollipops, ice dessert or the like, said apparatus comprising
• at least one first mould or moulding part (7) adapted for a first quantity of a flowable type of material in order to create a basic frozen form of the product (8).
• at least one surface coating area to provide said basic frozen form of the product (8) with a surface coating, and
• forming means to form said basic frozen form of the product (8) with the surface coating into a characteristic form (18, 19, 26),
said forming means including a second mould or moulding part (16) which basically comprises the contours of said characteristic form.

10. Apparatus according to claim 9, where said basic frozen form (8) partly or substantially comprises the characteristics of the frozen product after forming.

11. Apparatus according to claim 9 or 10, where at least one of said moulds or moulding sections (7, 16) is coated with a Teflon® or a similar anti-stick surface.

12. Apparatus according to any of the claims 9 to 11, where at least one of said moulds or mould sections (7, 16) comprises cooling means (13, 17) preferably cooling means cooled by means of a cryogenic fluid such as liquid nitrogen or dry ice.

13. Apparatus according to any of the claims 9 to 12, where said forming means includes means for adding a surface coating (15) of a liquid type of material to said basic frozen form (8) of the product and means (10) for solidifying said surface coating.

14. Apparatus according to any of the claims 9 to 13, where said liquid type of material is chocolate, fruit juice or the like.

15. Apparatus according to any of the claims 9 to 14, where said moulds or moulding parts (7, 16) comprise two halves (11, 12) with inner forming surfaces.

16. Apparatus according to any of the claims 9 to 15, where said contours may include different shapes, marks, stamps, patterns, projections etc (23 to 25) in order to create a frozen product with a three-dimensional (26) characteristic form.

17. Apparatus according to any of the claims 9 to 16, where the interior of said second mould or moulding part (16) is partly or substantially similar in size to that of the basic form (8) and the added surface coating (15).

18. Apparatus according to any of the claims 9 to 16, where the interior of said second mould or moulding part (16) is partly or substantially similar in size to that of the first mould or moulding part (7).

19. Apparatus according to any of the claims 9 to 17, where said first mould or moulding part (7) and said second mould or moulding part (16) is one and the same mould or moulding part.

20. Use of method according to any of the claims 1 to 8 to form a surface coating of ice products such as ice cream sticks, lollipops, dessert, bars, slices, logs, cakes, tubs or the like into characteristic three-dimensional forms or figures.

21. Use according to claim 20 with the characteristics including commercial messages such as brands, logos, trademarks etc. formed or embossed in the surface of said ice products.

22. Use of an apparatus according to any of the claims 9 to 19 to form a surface coating of ice products such as ice cream sticks, lollipops, dessert, bars, slices, logs, cakes, tubs or the like into characteristic three-dimensional forms or figures.

## Patentansprüche

1. Verfahren zur Herstellung von Tiefkühlprodukten mit einer charakteristischen Form aus wenigstens einer fließfähigen Art von Material, wobei die Tiefkühlprodukte Speiseeisprodukte umfassen, wie Eis am Stiel, Eislutscher, Eisdessert oder dergleichen, wobei das Verfahren die folgenden Schritte einschließt:
• Einbringen einer ersten Menge der fließfähigen Art von Material in eine erste Form oder ein erstes Formteil, um eine gefrorene Grundform eines Eisprodukts zu erzeugen,
• Hinzufügen eines Oberflächenüberzugs zu der gefrorenen Grundform, und
• Formen der gefrorenen Form des Produkts in eine charakteristische Form,
wobei das Formen eine Modifikation des Produkts in einer zweiten Form oder einem zweiten Formteil einschließt, wobei die zweite Form oder das zweite Formteil im Grunde die Umrisse der charakteristischen Form umfasst.

2. Verfahren nach Anspruch 1, wobei die gefrorene Grundform teilweise oder im Wesentlichen die Charakteristika des gefrorenen Produkts nach der Modifikation umfasst.

3. Verfahren nach Anspruch 1 oder 2, wobei der Oberflächenüberzug eine flüssige Art von Material ist, die zu der gefrorenen Grundform des Produkts hinzugefügt und vor der Modifikation verfestigt wurde.

4. Verfahren nach einem der Ansprüche 1 bis 3, wobei die Modifikation ein Kühlen des Eisprodukts in der ersten und/oder zweiten Form oder Formteil(en) einschließt, vorzugsweise durch Kühlen der Oberfläche der ersten und/oder zweiten Form oder Formteil(e).

5. Verfahren nach einem der Ansprüche 1 bis 4, wobei das Kühlen mittels eines Tieftemperaturfluids, wie flüssigem Stickstoff oder Trockeneis, erzeugt wird.

6. Verfahren nach einem der Ansprüche 1 bis 5, wobei die Temperatur des Kühlens niedriger als minus 65 Grad Celsius ist, wie zwischen minus 75 und 179 Grad Celsius, und vorzugsweise zwischen minus 75 und 80 Grad Celsius.

7. Verfahren nach einem der Ansprüche 1 bis 6, wobei die Temperatur des Kühlens steuerbar ist.

8. Verfahren nach einem der Ansprüche 1 bis 7, wobei die erste Form oder das erste Formteil auch als zweite Form oder zweites Formteil verwendet wird.

9. Vorrichtung zur Herstellung von Tiefkühlprodukten mit einer charakteristischen Form (18, 19, 26) aus wenigstens einer fließfähigen Art von Material, wobei die Tiefkühlprodukte Speiseeisprodukte umfassen, wie Eis am Stiel, Eislutscher, Eisdessert oder dergleichen, wobei die Vorrichtung umfasst
• wenigstens eine erste Form oder ein erstes Formteil (7), das für eine erste Menge einer fließfähigen Art von Material angepasst ist, um eine gefrorene Grundform des Produkts (8) zu erzeugen,
• wenigstens einen Oberflächenüberzugsbereich, um die gefrorene Grundform des Produkts (8) mit dem Oberflächenüberzug zu versehen, und
• Formgebungsmittel, um die gefrorene Grundform des Produkts (8) mit dem Oberflächenüberzug in eine charakteristische Form (18, 19, 26) zu formen,
wobei die Formgebungsmittel eine zweite Form oder ein zweites Formteil (16) einschließen, die/das im Grunde die Umrisse der charakteristischen Form umfasst.

10. Vorrichtung nach Anspruch 9, wobei die gefrorene Grundform (8) teilweise oder im Wesentlichen die Charakteristika des Tiefkühlprodukts nach dem Formen umfasst.

11. Vorrichtung nach Anspruch 9 oder 10, wobei wenigstens eine(s) der Formen oder Formteile (7, 16) mit einer Teflon®- oder ähnlichen Antihaftfläche beschichtet ist.

12. Vorrichtung nach einem der Ansprüche 9 bis 11, wobei wenigstens eine(s) der Formen oder Formteile (7, 16) Kühleinrichtungen (13, 17) umfasst, vorzugsweise mittels eines Tieftemperaturfluids, wie flüssigem Stickstoff oder Trokkeneis, gekühlte Kühleinrichtungen.

13. Vorrichtung nach einem der Ansprüche 9 bis 12, wobei das Formgebungsmittel Mittel zum Hinzufügen eines Oberflächenüberzugs (15) aus einer flüssigen Art von Material zu der gefrorenen Grundform (8) des Produkts und Mittel (10) zum Verfestigen des Oberflächenüberzugs einschließt.

14. Vorrichtung nach einem der Ansprüche 9 bis 13, wobei die flüssige Art von Material Schokolade, Fruchtsaft oder dergleichen ist.

15. Vorrichtung nach einem der Ansprüche 9 bis 14, wobei die Formen oder Formteile (7, 16) zwei Hälften (11, 12) mit inneren Formgebungsflächen umfassen.

16. Vorrichtung nach einem der Ansprüche 9 bis 15, wobei die Umrisse verschiedene Gestalten, Zeichen, Prägungen, Muster, Vorsprünge usw. (23 bis 25) einschließen können, um ein Tiefkühlprodukt mit einer dreidimensionalen (26) charakteristischen Form zu erzeugen.

17. Vorrichtung nach einem der Ansprüche 9 bis 16, wobei das Innere der zweiten Form oder des zweiten Formteils (16) teilweise oder im Wesentlichen von ähnlicher Größe wie dasjenige der Grundform (8) und des hinzugefügten Oberflächenüberzugs (15) ist.

18. Vorrichtung nach einem der Ansprüche 9 bis 16, wobei das Innere der zweiten Form oder des zweiten Formteils (16) teilweise oder im Wesentlichen von ähnlicher Größe wie dasjenige der ersten Form oder des ersten Formteils (7) ist.

19. Vorrichtung nach einem der Ansprüche 9 bis 17, wobei die erste Form oder das erste Formteil (7) und die zweite Form oder das zweite Formteil (16) ein und dieselbe Form oder ein und dasselbe Formteil ist.

20. Verwendung eines Verfahrens nach einem der Ansprüche 1 bis 8, um einen Oberflächenüberzug von Eisprodukten, wie Eis am Stiel, Eislutschern, Eisdessert, Eiscremeriegeln, Eiscremeschnitten, Eiscremeblöcken, Eiscremekuchen, Eiscremebechern oder dergleichen in charakteristische dreidimensionale Formen oder Figuren zu formen.

21. Verwendung nach Anspruch 20, wobei die Charakteristika Werbemitteilungen, wie Markennamen, Logos, Handelsmarken usw, einschließen, die in die Oberfläche der Eisprodukte eingeformt oder eingeprägt sind.

22. Verwendung einer Vorrichtung nach einem der Ansprüche 9 bis 19, um einen Oberflächenüberzug von Eisprodukten, wie Eis am Stiel, Eislutschern, Eisdessert, EiscremeriegeIn, Eiscremeschnitten, Eiscremeblöcken, Eiscremekuchen, Eiscremebechern oder dergleichen in charakteristische dreidimensionale Formen oder Figuren zu formen.

## Revendications

1. Procédé de fabrication de produits congelés, présentant une forme caractéristique, à partir d'au moins une substance de type fluide, lesdits produits congelés étant constitués par des produits comestibles sous forme de glaces tels que des bâtons de crème glacée, des sucettes glacées, des desserts glacés ou autres, ledit procédé comprenant les étapes consistant à :
• placer une première quantité de ladite substance de type fluide dans un premier moule ou une pièce de moulage afin de créer une forme de base congelée d'un produit glacé,
• ajouter un revêtement de surface sur ladite forme de base congelée, et
• donner à ladite forme congelée du produit une forme caractéristique,
ladite étape consistant à donner une forme caractéristique comprenant une modification du produit dans un deuxième moule ou une deuxième pièce de moulage, ledit deuxième moule ou ladite deuxième pièce de moulage présentant sensiblement les contours de ladite forme caractéristique.

2. Procédé selon la revendication 1, par lequel ladite forme de base congelée présente partiellement ou sensiblement les caractéristiques du produit congelé après modification.

3. Procédé selon la revendication 1 ou 2, par lequel ledit revêtement de surface est une substance de type liquide ajoutée à ladite forme de base congelée du produit et solidifiée avant modification.

4. Procédé selon l'une quelconque des revendications 1 à 3, par lequel ladite modification comprend un refroidissement du produit glacé dans ledit/lesdits premier et/ou second moule(s) ou pièce(s) de moulage, de préférence en refroidissant la surface dudit/desdits premier et/ou deuxième moule(s) ou pièce(s) de moulage.

5. Procédé selon l'une quelconque des revendications 1 à 4, par lequel le refroidissement est réalisé à l'aide d'un fluide cryogénique tel que de l'azote liquide ou de la glace sèche.

6. Procédé selon l'une quelconque des revendications 1 à 5, par lequel la température dudit refroidissement est inférieure à -65 degrés Celsius, notamment de - 75 degrés Celsius à -179 degrés Celsius, et de préférence entre -75 et -80 degrés Celsius.

7. Procédé selon l'une quelconque des revendications 1 à 6, par lequel la température dudit refroidissement est réglable.

8. Procédé selon l'une quelconque des revendications 1 à 7, par lequel le premier moule ou la première pièce de moulage sert également de deuxième moule ou de deuxième pièce de moulage.

9. Dispositif pour fabriquer des produits congelés (18, 19, 26), présentant une forme caractéristique, à partir d'au moins une substance de type fluide, lesdits produits congelés étant constitués par des produits comestibles sous forme de glaces tels que des bâtons de crème glacée, des sucettes de glace, des desserts glacés ou analogues, ledit dispositif comprenant :
• au moins un premier moule ou une première pièce de moulage (7) conçu pour une première quantité d'une substance de type fluide afin de créer une forme de base congelée du produit (8),
• au moins une zone de revêtement de surface pour appliquer un revêtement de surface sur ladite forme de base congelée du produit (8), et
• un moyen de mise en forme pour donner une forme caractéristique à ladite forme de base congelée du produit (8) pourvu du revêtement de surface,
ledit moyen de mise en forme comprenant un deuxième moule ou une deuxième pièce de moulage (16) qui présente sensiblement les contours de ladite forme caractéristique.

10. Dispositif selon la revendication 9, dans lequel ladite forme de base congelée (8) présente partiellement ou sensiblement les caractéristiques du produit congelé après mise en forme.

11. Dispositif selon la revendication 9 ou 10, dans lequel au moins un desdits moules ou au moins une desdites pièces de moulage (7, 16) est revêtu d'une surface antiadhésive en Téflon® ou analogue,

12. Dispositif selon l'une quelconque des revendications 9 à 11, dans lequel au moins un desdits moules ou au moins une desdites pièces de moulage (7, 16) comporte un moyen de refroidissement (13, 17), de préférence un moyen de refroidissement refroidi à l'aide d'un fluide cryogénique tel que de l'azote liquide ou de la glace sèche.

13. Dispositif selon l'une quelconque des revendications 9 à 12, dans lequel ledit moyen de mise en forme comporte un moyen pour ajouter un revêtement de surface (15) en substance de type liquide sur ladite forme de base congelée (8) du produit et un moyen (10) pour solidifier ledit revêtement de surface.

14. Dispositif selon l'une quelconque des revendications 9 à 13, dans lequel ladite substance de type fluide est du chocolat, du jus de fruit ou analogue.

15. Dispositif selon l'une quelconque des revendications 9 à 14, dans lequel lesdits moules ou lesdites pièces de moulage (7, 16) comportent deux moitiés (11, 12) pourvues de surfaces intérieures de mise en forme.

16. Dispositif selon l'une quelconque des revendications 9 à 15, dans lequel lesdits contours peuvent inclure toutes sortes de formes, marques, empreintes, motifs, reliefs, etc. (23, 25) afin de créer un produit congelé présentant une forme caractéristique (26) en trois dimensions.

17. Dispositif selon l'une quelconque des revendications 9 à 16, dans lequel l'intérieur dudit deuxième moule ou de ladite deuxième pièce de moulage (16) a des dimensions sensiblement similaires à celles de la forme de base (8) et du revêtement de surface ajouté (15).

18. Dispositif selon l'une quelconque des revendications 9 à 16, dans lequel l'intérieur dudit deuxième moule ou de ladite deuxième pièce de moulage (16) a des dimensions partiellement ou sensiblement similaires à celles du premier moule ou de la première pièce de moulage (7).

19. Dispositif selon l'une quelconque des revendications 9 à 17, dans lequel ledit premier moule ou ladite première pièce de moulage (7) et ledit deuxième moule ou ladite deuxième pièce de moulage (16) constituent un seul et même moule ou une seule et même pièce de moulage.

20. Utilisation du procédé selon l'une quelconque des revendications 1 à 8 pour former un revêtement de surface de produits glacés tels que des bâtons de crème glacée, des sucettes glacées, des desserts, des barres, des tranches, des bûches, des gâteaux, des pots ou autres pour leur donner une forme ou un décor caractéristique en trois dimensions.

21. Utilisation selon la revendication 20, les caractéristiques comprenant des messages commerciaux tels que des noms de sociétés, des logos, des marques commerciales et autres formés ou gravés dans la surface desdits produits glacés.

22. Utilisation d'un dispositif selon l'une quelconque des revendications 9 à 19 pour former un revêtement de surface de produits congelés tels que des bâtons de crème glacée, des sucettes, des desserts, des barres, des tranches, des bûches, des gâteaux, des pots ou autres afin de leur donner des formes ou des décors caractéristiques en trois dimensions.
